# FASCICULE DE BREVET EUROPEEN

(11) **EP 1 057 395 B1**
(45) Date de publication et mention de la délivrance du brevet: **03.03.2004**
(21) Numéro de dépôt: 00420107.5
(22) Date de dépôt: 23.05.2000
(51) Int. Cl.: A01D 34/416, A01D 34/00

(54) **Tète de coupe pour débrousailleuse ou taille-bordures**
Schneidekopf für Buschmäher oder Kantentrimmer
Cutter head for brushcutter or edge trimmer

(30) Priorité: 04.06.1999 FR 9907228
(43) Date de publication de la demande: 06.12.2000
(73) Titulaire: Speed France, 69658 Arnas (FR)
(72) Inventeur: Legrand, Emmanuel, 01480 Villeneuve (FR)
(74) Mandataire: Bratel, Gérard

(56) Documents cités:
- DE-A- 2 444 610
- GB-A- 1 583 521
- GB-A- 2 214 048
- NL-A- 8 302 111
- US-A- 4 513 563
- US-A- 4 924 665

## Description

La présente invention concerne les appareils de motoculture communément appelés débroussailleuses et taille-bordures, destinés à couper la végétation au moyen de fils de coupe. Cette invention s'intéresse, plus particulièrement, aux têtes de coupe rotatives pour de tels appareils.

Ces appareils sont équipés généralement d'un moteur thermique ou électrique qui entraîne en rotation, à une vitesse élevée pouvant être comprise entre environ 3000 tours/minute et 12000 tours/minute, une tête tournante supportant un ou plusieurs fils de coupe. Au cours de la rotation de la tête, et sous l'effet de la force centrifuge, le ou les fils de coupe se déploient radialement et balayent ainsi une certaine zone circulaire, à l'intérieur de laquelle ils exercent un effet tranchant sur la végétation rencontrée.

On connaît actuellement deux grandes catégories de têtes de coupe pour ce genre d'appareils. Le premier type de tête contient une bobine de fil de coupe, que l'on peut progressivement dévider au fur et à mesure de l'usure ou de la casse du fil utilisé. Le second type connu de tête, auquel s'apparente aussi la présente invention, n'utilise pas de bobine de fil, mais seulement un ou plusieurs brins de fil de coupe, de relativement faible longueur, qu'il convient de fixer individuellement sur la tête. En ce qui concerne ce dernier type de tête de coupe, il peut être fait référence aux documents GB-A-2214048, NL-A-8302111, US-A-4924665, GB-A-1583521 et US-A-4513563.

Toutes les têtes de coupe actuelles, avec ou sans bobine de fil de coupe, sont difficiles à recharger, et/ou d'une structure compliquée et coûteuse, et posent encore divers problèmes.

Ainsi, un inconvénient des têtes de coupe avec bobine de fil est le phénomène de collage, expliqué ci-après : certains appareils puissants sollicitent considérablement le fil de coupe à l'intérieur de leur tête rotative, en raison des vibrations et des tensions du fil dues à la rotation de ladite tête à une très grande vitesse, pouvant atteindre 12000 tours/minute. Il en résulte une importante montée en température, très proche du point de fusion des fils de coupe habituels (de 200 à 220° C), et cette montée en température peut provoquer un collage des spires de fil enroulées sur la bobine logée dans la tête rotative.

Un autre phénomène constaté est la " casse à l'oeillet " : un fil de coupe traditionnel, trop sollicité, finira par casser au niveau de l'oeillet, par lequel le fil sort de la tête rotative. En effet, par suite d'efforts mécaniques de flexion répétés, le fil s'échauffe à la sortie de l'oeillet de la tête. La montée en température progressive du fil engendre, à cet endroit, une boursouflure importante qui devient rapidement un point de fragilité, provoquant un départ de rupture de fil ; il s'ensuit alors une casse du fil. Ce phénomène résulte aussi du fait que les oeillets de sortie du fil des têtes de coupe actuelles sont des oeillets en aluminium ou en laiton, à angles vifs, qui favorisent la casse du fil.

Dans le cas des têtes de coupe connues sans bobine, les organes mécaniques de retenue des brins de fil de coupe sont habituellement d'une structure relativement complexe, et d'une utilisation peu commode, avec le risque qu'en cas de casse du fil de coupe, un morceau de fil reste coincé dans lesdits organes et devienne difficile à extraire.

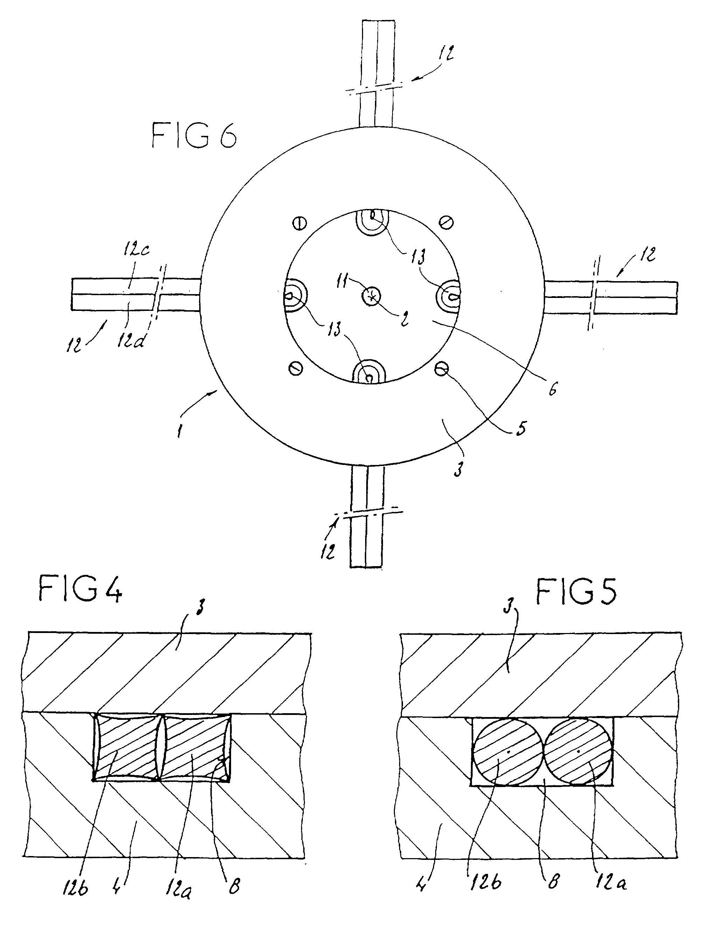

Plus particulièrement, en se référant aux documents précités, l'état de la technique comporte encore les particularités et inconvénients suivants :
- Documents GB-A-2214048 et NL-A-8302111 : Chaque brin de fil doit être plié en "U", et introduit dans deux passages parallèles et de faible section de la tête, ce qui apparaît délicat.
- Document US-A-4924665 : Le brin de fil est simplement replié en crochet, à une extrémité, et introduit au travers d'une ouverture, ce qui est valable pour un fil métallique rigide, mais inapplicable à un brin de fil souple.
- Document GB-A-1583521 : Selon les figures 4 et 6, le brin de fil traverse "diamétralement" la tête de coupe, en formant plusieurs coudes, ce qui rend difficiles la mise en place et le remplacement du fil ; selon les figures 5 et 7, chaque brin de fil possède, à une extrémité, une conformation élargie, ce qui nécessite l'utilisation de fils de coupe spéciaux, au lieu de fils d'un type courant, de section constante.
- Document US-A-4513563 : Le brin de fil est retenu au moyen d'un noeud formé sur ce brin (voir figure 10), ce qui apparaît assez aléatoire ; ainsi, un noeud est déjà difficile à former sur un fil de coupe, et le noeud aura tendance à se défaire de lui-même, dans le temps.

Il peut encore être fait référence au document DE-A-2444610 (figure 2), qui concerne une faucheuse et non une débroussailleuse ou un taille-bordures, et dans lequel les brins de fil sont métalliques, et sont retenus par le fait que leurs deux tronçons parallèles sont liés entre eux, ce qui rend lesdits brins difficilement démontables et remplaçables. Un tel dispositif ne convient pas à la retenue de brins souples, formant deux tronçons coupants libres.

La présente invention vise à éliminer les inconvénients des têtes de coupe actuelles avec ou sans bobine, en fournissant une tête perfectionnée qui supprime les problèmes de collage et de casse à l'oeillet, tout en facilitant sa recharge en fil de coupe et la retenue de ce fil, par une solution particulièrement simple, économique et efficace.

A cet effet, la présente invention a essentiellement pour objet une tête de coupe rotative pour débroussailleuse ou taille-bordures, du genre de celles utilisant des brins de fil de coupe de relativement faible longueur, retenus individuellement sur la tête, cette tête étant caractérisée en ce qu'elle comporte, entre sa périphérie et un évidement central, au moins un passage radial de section correspondant au double de la section d'un brin de fil de coupe, de telle sorte que le ou chaque brin de fil de coupe traverse le passage radial une première fois et est plié à 180° à l'intérieur de l'évidement central pour traverser ledit passage radial une deuxième fois, le pliage du brin à 180° formant, à l'intérieur de l'évidement central de la tête, une boursouflure latérale du brin qui assure sa retenue.

Ainsi, l'invention propose une tête de coupe qui, étant du type " sans bobine ", supprime déjà tous les problèmes de collage des spires. De plus, cette tête comporte un système de retenue pour brins de fil de coupe souple qui ne nécessite aucun organe mécanique, tout en assurant un blocage très efficace du ou de chaque brin de fil, résistant à la force centrifuge (l'effort de traction nécessaire pour séparer un brin de fil de la tête étant d'au moins 2000 N).

A cet égard, l'invention repose sur la constatation surprenante qu'un simple pliage d'un brin de fil en matière synthétique crée sur ce fil, au point de pliage, une boursouflure latérale suffisante pour arrêter le fil, du fait que le passage traversé par le fil est dimensionné de façon appropriée. Une telle boursouflure est obtenue aussi bien avec un brin de fil de coupe de section ronde qu'avec un brin de fil de section polygonale, par exemple carrée. Il s'est avéré qu'un brin de fil de section généralement carrée, mais avec des côtés curvilignes concaves, facilitait la formation de la boursouflure retenant ce brin de fil.

La manipulation nécessaire à l'introduction d'un brin de fil et à son pliage est simple et rapide, et elle ne nécessite aucun démontage de la tête, dans la mesure où l'évidement central de celle-ci est dirigé vers le bas, donc vers l'extérieur de l'appareil.

Selon une première possibilité, le pliage à 180° du ou de chaque brin de fil de coupe, assurant sa retenue sur la tête par création d'une boursouflure, peut être réalisé à faible distance d'une extrémité de ce brin, la partie pliée étant de longueur suffisante pour traverser le passage radial ménagé dans la tête.

Selon une autre possibilité, le pliage à 180° du ou de chaque brin de fil de coupe, assurant sa retenue sur la tête par création d'une boursouflure, est réalisé sensiblement au milieu de la longueur de ce brin, de manière à former, à partir de ce brin, deux tronçons coupants de fil libres, parallèles et sensiblement de même longueur, s'étendant dans un même plan perpendiculaire à l'axe de la tête. Ainsi, un seul brin de fil, bloqué sur la tête, forme deux tronçons actifs parallèles, ce qui augmente le pouvoir coupant du fil tout en répartissant mieux l'effort, d'où une augmentation de la longévité du fil. De plus, il a été constaté que le montage de deux tronçons de fil " en parallèle ", dans le même plan, conduisait à une diminution sensible du niveau sonore en cours de fonctionnement, même en utilisant un fil lisse et de section ordinaire (ronde ou carrée).

Selon une autre caractéristique avantageuse, le ou chaque passage radial, ménagé dans la tête de coupe, présente à son débouché sur la périphérie de ladite tête au moins une surface limitrophe arrondie, de rayon de courbure relativement important et aussi de longueur développée relativement importante. Cette forme arrondie, offrant une grande surface d'appui pour le brin de fil de coupe sortant de la tête tout en limitant sa flexion, permet d'éviter efficacement et économiquement le phénomène indésirable de " casse à l'oeillet ", et contribue ainsi à la longévité du fil. De préférence, le ou chaque passage radial présente deux telles surfaces d'appui arrondies, disposées symétriquement, donnant à ce passage un débouché de forme évasée, de manière à procurer le même effet avantageux, pour une tête tournant dans un sens ou dans l'autre.

Enfin, on notera que la tête, objet de l'invention, est réàlisable tant en métal qu'en matière synthétique, sans limites dimensionnelles en diamètre ou en hauteur, cette tête pouvant recevoir des brins de fils de coupe en nombre quelconque, et étant utilisable sur tout appareil du genre débroussailleuse ou taille-bordures, en intercalant éventuellement un adaptateur pour son montage.

L'invention sera mieux comprise à l'aide de la description qui suit, en référence au dessin schématique annexé représentant, à titre d'exemple, une forme d'exécution de cette tête de coupe pour débroussailleuse ou taille-bordures.
Figure 1 est une vue en perspective d'une tête de coupe conforme à la présente invention ;
Figure 2 est une vue en plan par dessous, avec coupe partielle, de la tête de coupe de la figure 1 ;
Figure 3 est une vue partielle en coupe de cette tête, suivant III-III de figure 2 ;
Figure 4 est une autre vue partielle en coupe de la même tête, suivant IV-IV de figure 2, à échelle agrandie ;
Figure 5 est une vue en coupe similaire à figure 4, illustrant une variante relative à la section des brins de fil de coupe ;
Figure 6 est une vue en plan par dessous de la même tête de coupe, utilisée avec des brins en nombre et disposition différents.

La tête de coupe rotative représentée au dessin, désignée globalement par le repère 1, possède un axe central 2 et résulte de la juxtaposition de deux pièces circulaires 3 et 4, assemblées entre elles au moyen de plusieurs vis 5. La première pièce 3 est de forme annulaire, et la seconde pièce 4 est de forme circulaire bombée, de manière à créer dans la tête 1 un évidement central 6, en forme de cavité sensiblement hémisphérique. La conformation des pièces 3 et 4 accolées définit une gorge annulaire périphérique 7.

Entre l'évidement central 6 et la gorge périphérique 7 de la tête 1 sont ménagés, dans l'exemple illustré au dessin, quatre passages radiaux 8 espacés par des intervalles angulaires réguliers de 90°. Comme le montrent les figures 4 et 5, chaque passage radial 8 possède une section rectangulaire, avec une longueur égale au double de sa hauteur.

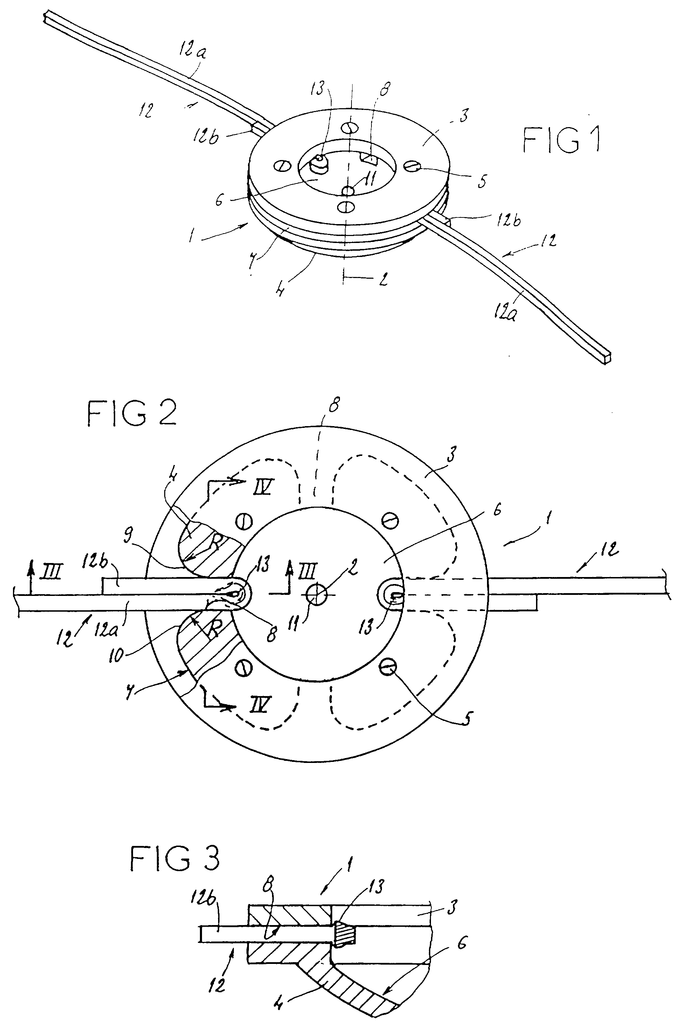

Comme le montre la figure 2, chaque passage radial 8 présente, à son débouché dans la gorge périphérique 7 de la tête 1, un évasement résultant de deux surfaces limitrophes arrondies 9 et 10, disposées symétriquement. Le rayon de courbure R et la longueur développée de chaque surface arrondie 9 ou 10 sont relativement importants, par exemple de l'ordre de 1 à 2 cm. La tête de coupe 1 possède encore un trou taraudé 11 situé sur son axe central 2, au fond de l'évidement central 6, pour sa fixation sur un appareil tel que débroussailleuse ou taille-bordures, et pour son entraînement en rotation par les moyens moteurs de cet appareil.

Chaque passage radial 8 de la tête 1 peut recevoir un brin 12 de fil de coupe, notamment en matière synthétique, la figure 1 montrant la tête 1 pourvue seulement de deux brins 12 diamétralement opposés, et la figure 6 illustrant la possibilité de garnir cette tête 1 de quatre brins 12, séparés par des intervalles angulaires de 90°.

Chaque brin 12 de fil de coupe est fixé sur la tête 1 en traversant une première fois un passage 8, de l'extérieur vers l'intérieur, puis en étant plié à 180° à l'intérieur de l'évidement central 6, et enfin en traversant une deuxième fois le même passage radial 8, de l'intérieur vers l'extérieur. Au point de pliage à 180° du brin 12, ce pliage forme une boursouflure latérale 13 du brin 12 qui assure sa retenue, par butée contre la surface de l'évidement central 6, autour du débouché intérieur du passage 8, comme montré sur la figure 3.

Dans l'exemple illustré sur les figures 1 à 3, le pliage à 180° de chaque brin 12 de fil de coupe est réalisé à faible distance d'une extrémité de ce brin 12. Ainsi, le brin 12 possède une partie principale 12a de longueur importante servant à la coupe de la végétation, et une partie pliée 12b de faible longueur, suffisante pour traverser le passage radial 8 correspondant.

A leur traversée de ce passage radial 8, les deux parties 12a et 12b du brin 12 sont juxtaposées, et remplissent la section du passage 8, comme le montre la figure 4. Le brin 12 possède avantageusement une section sensiblement carrée, dont le côté correspond à la hauteur de la section du passage radial 8, donc à la moitié de la longueur de cette section. Plus particulièrement, en utilisant un brin 12 de fil de coupe de section carrée à côtés curvilignes concaves, on favorise la formation de la boursouflure latérale 13 assurant la retenue de ce brin 12.

En variante, comme le montre la figure 5, chaque brin 12 de fil de coupe peut aussi posséder une section circulaire, dont le diamètre correspond à la hauteur de la section du passage radial 8, donc à la moitié de la longueur de la section de ce passage 8.

Enfin, en se référant à la figure 6, on notera que chaque brin 12 de fil de coupe peut aussi être plié à 180° au milieu de sa longueur, de manière à former deux tronçons coupants 12c et 12d, de même longueur, libres et s'étendant parallèlement l'un à l'autre, dans un même plan perpendiculaire à l'axe central 2 de la tête de coupe 1. Un tel doublement des brins 12 assure un fonctionnement particulièrement silencieux de la tête de coupe 1, tout en améliorant le pouvoir coupant.

Dans tous les cas, en cours de fonctionnement, l'une ou l'autre des surfaces arrondies 9 et 10 (selon le sens de rotation de la tête 1) sert de surface d'appui pour le brin 12 correspondant, à sa sortie de la tête 1, ce qui évite le phénomène de " casse à l'oeillet ".

L'on ne s'éloignerait pas du cadre de l'invention, telle que définie dans les revendications annexées :
- en modifiant le nombre de passages radiaux ménagés dans la tête de coupe, ou d'autres détails de forme de cette tête ;
- en réalisant la tête de coupe en toutes matières, et en une ou plusieurs pièces ;
- en modifiant le nombre des brins de fil de coupe, fixés sur la tête ;
- en utilisant des brins de fil de coupe de toutes sections, et en toutes matières permettant un pliage avec formation d'une boursouflure.

## Revendications

1. Tête de coupe rotative pour débroussailleuse ou taille-bordures, du genre de celles utilisant des brins de fil de coupe de relativement faible longueur, retenus individuellement sur la tête, **caractérisée en ce qu'**elle comporte, entre sa périphérie (7) et un évidement central (6), au moins un passage radial (8) de section correspondant au double de la section d'un brin (12) de fil de coupe, de telle sorte que le ou chaque brin (12) de fil de coupe traverse le passage radial (8) correspondant une première fois et est plié à 180° à l'intérieur de l'évidement central (6), pour traverser ledit passage radial (8) une deuxième fois, le pliage du brin (12) à 180° formant, à l'intérieur de l'évidement central (6) de la tête (1), une boursouflure latérale (13) du brin (12) qui assure sa retenue.

2. Tête de coupe selon la revendication 1, **caractérisée en ce que** la boursouflure (13) est obtenue par pliage d'un brin de fil (12) de section ronde.

3. Tête de coupe selon la revendication 1, **caractérisée en ce que** la boursouflure (13) est obtenue par pliage d'un brin de fil (12) de section polygonale, par exemple carrée.

4. Tête de coupe selon la revendication 3, **caractérisée en ce que** la boursouflure (13) est obtenue par pliage d'un brin de fil (12) de section généralement carrée, mais avec des côtés curvilignes concaves.

5. Tête de coupe selon l'une quelconque des revendications 1 à 4, **caractérisée en ce que** le pliage à 180° du ou de chaque brin (12) de fil de coupe, assurant sa retenue sur la tête (1) par création d'une boursouflure (13), est réalisé à faible distance d'une extrémité de ce brin (12), la partie pliée (12b) étant de longueur suffisante pour traverser le passage radial (8) ménagé dans la tête (1).

6. Tête de coupe selon l'une quelconque des revendications 1 à 4, **caractérisée en ce que** le pliage à 180° du ou de chaque brin (12) de fil de coupe, assurant sa retenue sur la tête (1) par création d'une boursouflure (13), est réalisé sensiblement au milieu de la longueur de ce brin (12) de manière à former, à partir de ce brin (12), deux tronçons coupants de fil (12c, 12d) libres, parallèles et sensiblement de même longueur, s'étendant dans un même plan perpendiculaire à l'axe (2) de la tête (1), de manière à réduire le niveau sonore en cours de fonctionnement.

7. Tête de coupe selon l'une quelconque des revendications 1 à 6, **caractérisée en ce que** le ou chaque passage radial (8), ménagé dans cette tête (1), présente à son débouché sur la périphérie (7) de ladite tête (1) au moins une surface limitrophe arrondie (9, 10) de rayon de courbure relativement important, et aussi de longueur développée relativement importante, pour l'appui du brin (12) de fil de coupe à sa sortie de la tête (1).

8. Tête de coupe selon la revendication 7, **caractérisée en ce que** le ou chaque passage radial (8) présente deux surfaces d'appui arrondies (9, 10), disposées symétriquement, donnant à ce passage radial (8) un débouché de forme évasée.

## Claims

1. A rotary cutting head for brush cutters or edge trimmers, of the kind of those using relatively short cutting line filaments individually retained on the head, **characterised in that** it includes, between its periphery (7) and a central recess (6), at least one radial passageway (8) of cross section corresponding to twice the cross section of a cutting line filament (12), in such a way that the or each cutting line filament (12) passes through the corresponding radial passageway (8) a first time and is folded through 180° inside the central recess (6) in order to pass through said radial passageway (8) a second time, the 180° folding of the filament (12) forming, inside the central recess (6) in the head (1), a lateral swelling (13) of the filament (12) which ensures its retention.

2. The cutting head as claimed in claim 1, **characterised in that** the swelling (13) is obtained by folding a line filament (12) of round cross section.

3. The cutting head as claimed in claim 1, **characterised in that** the swelling (13) is obtained by folding a line filament (12) of polygonal, for example square, cross section.

4. The cutting head as claimed in claim 3, **characterised in that** the swelling (13) is obtained by folding a line filament (12) of generally square cross section, but with concave curvilinear sides.

5. The cutting head as claimed in any one of claims 1 to 4, **characterised in that** the 180° folding of the or each cutting line filament (12), ensuring its retention on the head (1) by creating a swelling (13), is carried out a short distance from one end of this filament (12), the folded part (12b) being long enough to pass through the radial passageway (8) made in the head (1).

6. The cutting head as claimed in any one of claims 1 to 4, **characterised in that** the 180° folding of the or each cutting line filament (12), ensuring its retention on the head (1) by creating a swelling (13), is carried out approximately in the middle of the length of this filament (12), so as to form, from this filament (12), two free cutting line portions (12c, 12d), which are parallel and approximately of the same length, extending in the same plane perpendicular to the axis (2) of the head (1), so as to reduce the sound level during operation.

7. The cutting head as claimed in any one of claims 1 to 6, **characterised in that** the or each radial passageway (8), made in this head (1), has at its outlet on the periphery (7) of said head (1), at least one rounded adjoining surface (9,10) of relatively large radius of curvature, and also of relatively large developed length, for the bearing of the cutting line filament (12) at the point where it leaves the head (1).

8. The cutting head as claimed in claim 7, **characterised in that** the or each radial passageway (8) has two rounded bearing surfaces (9,10), arranged symmetrically, giving this radial passageway (8) an outlet of flared shape.

## Patentansprüche

1. Rotierender Schneidekopf für Buschmäher oder Kantentrimmer, wobei Schneidfadenstücke von relativ geringer Länge verwendet werden, die einzeln am Kopf gehalten werden, **dadurch gekennzeichnet, dass** er zwischen seiner Peripherie (7) und einer mittigen Aussparung (6) mindestens einen radialen Durchlass (8) mit einem Querschnitt umfasst, der dem Doppelten des Querschnitts eines Schneidfadenstückes (12) entspricht, derart, dass das oder jedes Schneidfadenstück (12) den entsprechenden radialen Durchlass (8) ein erstes Mal durchquert und im Inneren der mittigen Aussparung (6) um 180° gebogen wird, um den radialen Durchlass (8) ein zweites Mal zu durchqueren, wobei die Biegung des Stückes (12) um 180° im Inneren der mittigen Aussparung (6) des Kopfes (1) eine seitliche Verdickung (13) des Stückes (12) bildet, die für seine Fixierung sorgt.

2. Schneidekopf nach Anspruch 1, **dadurch gekennzeichnet, dass** die Verdickung (13) durch das Biegen eines Fadenstückes (12) mit rundem Querschnitt erzielt wird.

3. Schneidekopf nach Anspruch 1, **dadurch gekennzeichnet, dass** die Verdickung (13) durch das Biegen eines Fadenstückes (12) mit vieleckigem, zum Beispiel quadratischem, Querschnitt erzielt wird.

4. Schneidekopf nach Anspruch 1, **dadurch gekennzeichnet, dass** die Verdickung (13) durch das Biegen eines Fadenstückes (12) mit allgemein quadratischem Querschnitt, jedoch mit gekrümmten, konkaven Seiten, erzielt wird.

5. Schneidekopf nach einem der Ansprüche 1 bis 4, **dadurch gekennzeichnet, dass** das Biegen um 180° des oder jedes Schneidfadenstückes (12), das für seine Fixierung am Kopf (1) durch Bildung einer Verdickung (13) sorgt, in geringer Entfernung von einem Ende dieses Fadenstückes (12) erfolgt, wobei der gebogene Teil (12b) ausreichend lang ist, um den radialen Durchlass (8) zu durchqueren, der in dem Kopf (1) gebildet ist.

6. Schneidekopf nach einem der Ansprüche 1 bis 4, **dadurch gekennzeichnet, dass** das Biegen um 180° des oder jedes Schneidfadenstückes (12), das für seine Fixierung am Kopf (1) durch Bildung einer Verdickung (13) sorgt, annähernd in der Mitte der Länge dieses Fadenstückes (12) erfolgt, um aus diesem Fadenstück (12) zwei freie, parallele schneidende Fadenabschnitte (12c, 12d) von annähernd gleicher Länge zu bilden, die sich in der gleichen Ebene senkrecht zur Achse (2) des Kopfes (1) erstrecken, derart, dass der Lärmpegel während des Betriebs gesenkt wird.

7. Schneidekopf nach einem der Ansprüche 1 bis 6, **dadurch gekennzeichnet, dass** der oder jeder radiale Durchlass (8), der in diesem Kopf (1) gebildet ist, an seiner Mündung an der Peripherie (7) des Kopfes (1) mindestens eine abgerundete angrenzende Fläche (9, 10) mit relativ großem Krümmungsradius und auch von relativ großer ausgebildeter Länge zum Halten des Schneidfadenstückes (12) an seinem Austritt aus dem Kopf (1) aufweist.

8. Schneidekopf nach Anspruch 7, **dadurch gekennzeichnet, dass** der oder jeder radiale Durchlass (8) zwei symmetrisch angeordnete abgerundete Halteflächen aufweist, die diesem radialen Durchlass (8) eine Mündung mit konisch erweiterter Form verleihen.
